# EUROPÄISCHE PATENTSCHRIFT

(11) **EP 3 789 726 B1**
(45) Veröffentlichungstag und Bekanntmachung des Hinweises auf die Patenterteilung: **22.03.2023**
(21) Anmeldenummer: 19195449.4
(22) Anmeldetag: 04.09.2019
(51) Int. Cl.: G01B 5/00, G01B 5/012, G01B 11/00

(54) **SENSORELEMENT ZUR SIGNALISIERUNG UND BESTIMMUNG EINER AUSLENKUNG EINES TASTSTIFTS UND ZUR VERWENDUNG IN EINEM TASTSYSTEM**
SENSOR ELEMENT FOR SIGNALING AND DETERMINING A DEFLECTION OF A PROBE TIP AND FOR USE IN A SENSOR SYSTEM
ÉLÉMENT DE CAPTEUR DESTINÉ À LA SIGNALISATION ET À LA DÉTERMINATION D'UNE DÉVIATION D'UN PALPEUR ET À ÊTRE UTILISÉ DANS UN SYSTÈME DE PALPEUR

(43) Veröffentlichungstag der Anmeldung: 10.03.2021
(73) Patentinhaber: Hexagon Technology Center GmbH, 9435 Heerbrugg (CH)
(72) Erfinder: MAYER, Tim, CH-9443 Widnau (CH)
(74) Vertreter: Kaminski Harmann

(56) Entgegenhaltungen:
- WO-A1-2004/068068
- DE-A1- 10 108 774

## Beschreibung

### -FACHGEBIET DER ERFINDUNG-

Die Erfindung betrifft im Allgemeinen maschinengeführte Tastsysteme zur taktilen Vermessung von Oberflächenpunkten eines Objekts und im Besonderen Sensorelemente die in solchen Tastsystemen verwendet werden.

### -HINTERGRUND-

Maschinengeführte Tastsysteme zur Bestimmung von Koordinaten von Oberflächenpunkten eines Objekts sind bekannt unter anderem aus dem Bereich der Metrologie. Ein typisches Tastsystem zur taktilen Vermessung von Oberflächenpunkten weist dabei eine Befestigungsvorrichtung zur Befestigung des Tastsystems an einer mobilen Plattform einer Koordinatenmessoder Werkstückbearbeitungsmaschine und einen Taststift mit einer an dessen Ende angebrachten Rubinkugel auf. Zur Vermessung eines Oberflächenpunktes wird die Rubinkugel mit dem Oberflächenpunkt in Kontakt gebracht, wodurch eine Auslenkung des Taststiftes bewirkt wird. Je nach Art des Tastsystems wird dann die Berührung erkannt und/oder die Auslenkung des Taststiftes bestimmt. Unabhängig von der Art des Tastsystems weist dieses ein Sensorelement auf, welches bei einer Auslenkung des Taststiftes ein Sensorsignal erzeugt. Wird vom Tastsystem nicht nur die Berührung, sondern auch die damit einhergehende Auslenkung des Taststiftes ermittelt, ist das Sensorelement so konzipiert, dass es ein zur Auslenkung des Taststifts verhältnismässig definiertes Sensorsignal erzeugt. Das erzeugte Sensorsignal wird von einer Sensorsignalauswerteeinheit ausgewertet und einer Berührung und/oder einer Auslenkung des Taststiftes zugeordnet. Die Bereitstellung dieser Information ermöglicht der Koordinatenmess- oder Werkstückbearbeitungsmaschine die Bestimmung der Koordinaten des berührten Oberflächenpunktes.

Unterschiedlichste Bauweisen solcher Tastsysteme wurden vorgeschlagen, um unterschiedlichste Vermessungsaufgaben zu lösen. Dabei spielt vor allem das Sensorelement im Zusammenwirken mit der Sensorsignalauswerteeinheit eine zentrale Rolle. DE 101 08 774 A1 und WO 2004/068068 A1 beschreiben einen Tastkopf für ein Koordinatenmessgerät.

Die Aufgabe der Erfindung betrifft die Bereitstellung eines verbesserten Sensorelements und dadurch eines verbesserten Tastsystems.

Insbesondere ist es eine Aufgabe der Erfindung diese Verbesserung in Bezug auf die Sensitivität und Genauigkeit bei der Bestimmung der Auslenkung eines Taststiftes bereitzustellen.

### -BESCHREIBUNG DER ERFINDUNG-

Die Erfindung betrifft ein Sensorelement zur Signalisierung und Bestimmung einer Auslenkung eines Taststifts, insbesondere wobei der Taststift Teil eines maschinengeführten Tastsystems ist, mit einem Basiskörper mit einer mittigen, insbesondere lochförmigen, Aussparung, einem Federlager mit mindestens einem Federlagerelement, einer Sensorfläche, einer der Sensorfläche gegenüberliegenden Verbindungsfläche, welche dazu konfiguriert ist einen Taststift mit dem Sensorelement zu verbinden, und einer Kopplungseinheit, wobei die Kopplungseinheit durch das Federlager federnd in der mittigen Aussparung des Basiskörpers gelagert ist, wobei das Federlager eine Bewegbarkeit der Kopplungseinheit in mindestens zwei rotatorischen und einem translatorischen Freiheitsgrad bereitstellt, und die Sensorfläche und die Verbindungsfläche mechanisch aneinanderkoppelt, wobei die Auslenkung eines mit dem Sensorelement verbundenen Taststifts über die Verbindungsfläche und Kopplungseinheit eine Auslenkung der Sensorfläche bewirkt und die Auslenkung der Sensorfläche in einer festen und definierten Relation zur Auslenkung des Taststifts steht, und das Federlager, die Sensorfläche, die Verbindungsfläche, die Kopplungseinheit und der Basiskörper einstückig miteinander in einem einstückigen Verbund aus Silikatglas, insbesondere Quarzglas, verbunden sind, wobei der einstückige Verbund monolithisch aus Silikatglas, insbesondere Quarzglas, gefertigt ist.

Gemäss einer Ausführungsform des Sensorelements kann das Federlager sechs Federlagerelemente, insbesondere gleicher Länge, aufweisen, die als drei Federlagerelementpaare in der mittigen, insbesondere lochförmigen, Aussparung des Basiskörpers unter einem Winkel von um die 120°, insbesondere von 110° bis 130°, zueinander angeordnet sind.

Gemäss einer weiteren Ausführungsform des Sensorelements kann der Basiskörper scheibenförmig, insbesondere als rundliche Scheibe, ausgebildet sein, insbesondere mit einem Durchmesser von mindestens 1 cm. Dabei kann das Federlagerelement als stabförmiges Blattfederelement oder als Stabfederelement mit rundlichem Querschnitt ausgebildet sein.

Gemäss einer spezifischen Ausführungsform des Sensorelements kann die Sensorfläche eine optische Strahlung, insbesondere spiegelnd/gerichtet, reflektierende Fläche sein oder eine solche aufweisen.

Gemäss einer weiteren spezifischen Ausführungsform des Sensorelements kann die Verbindungsfläche dazu konfiguriert sein einen Taststift über eine Unterbrechervorrichtung mit dem Sensorelement zu verbinden.

Dabei ist die Unterbrechervorrichtung eine Vorrichtung über welche der Taststift mit dem Sensorelement verbunden/gekoppelt wird. Diese Unterbrechervorrichtung ist dazu ausgelegt Auslenkungen des Taststifts zu begrenzen, sodass die Federlagerelemente des Sensorelements nicht überbelastet werden und versagen.

Gemäss einer spezifischen Ausführungsform des Sensorelements kann das Federlager eine Bewegbarkeit der Kopplungseinheit in einem translatorischen Freiheitsgrad in Richtung der Längsrichtung eines mit dem Sensorelement verbundenen Taststifts, und in zwei rotatorischen Freiheitsgraden um zwei Rotationsachsen senkrecht, insbesondere zueinander und, zur Längsrichtung eines mit dem Sensorelement verbundenen Taststifts bereitstellen.

Die Erfindung betrifft auch ein Tastsystem zur maschinengeführten Abtastung und Vermessung von Punkten einer Oberfläche mit einem Tastsystemgehäuse, einem Sensorelement zur Erzeugung eines Auslenkungssignals, einem Taststift, der mit dem Sensorelement verbunden ist, einer Unterbrechervorrichtung zur Unterbrechung der maschinengeführten Abtastung, einer Lichtquelle zur Aussendung eines Lichtstrahls, einer optischen Detektionsvorrichtung mit definierter Lage- und Positionsrelation zu dem Sensorelement und mit einem optischen Detektor zur Detektion von Lichtstrahlung, wobei das Sensorelement mit dem Tastsystemgehäuse verbunden ist und eine Sensorfläche aufweist, die ein Auslenkungssignal erzeugt, das eine Auslenkung des Taststifts anzeigt, wobei der Taststift über die Unterbrechervorrichtung mit dem Sensorelement und relativ zum Tastsystemgehäuse auslenkbar verbunden ist, die Unterbrechervorrichtung die maschinengeführte Abtastung bei Überschreitung eines definierten Auslenkungsschwellenwerts durch den Taststift unterbricht, und das Auslenkungssignal basierend darauf erzeugt wird, dass ein von der Lichtquelle ausgesendeter Lichtstrahl durch ein Zusammenwirken mit der Sensorfläche auslenkungssensitiv in Richtung des optischen Detektors gelenkt und von diesem positionssensitiv detektiert wird, und einem Prozessor, welcher dazu konfiguriert ist basierend auf dem Auslenkungssignal eine Berührung zwischen dem Taststift und einem Punkt der Oberfläche zu identifizieren und eine Auslenkung des Taststifts, insbesondere in mindestens zwei Freiheitsgraden, in Form eines Auslenkungswerts zu bestimmen, wobei das Sensorelement ein erfindungsgemässes Sensorelement bzw. ein Sensorelement gemäss einer möglichen Ausführungsform des erfindungsgemässen Sensorelements ist.

Gemäss einer möglichen Ausführungsform des Tastsystems kann die Lichtquelle eine Laserlichtquelle zur Aussendung eines Laserlichtstrahls sein und eine definierte Lage- und Positionsrelation zu dem Sensorelement aufweisen, wobei der Laserlichtstrahl auf das Sensorelement gerichtet in Richtung der Sensorfläche ausgesendet wird, und der Laserlichtstrahl durch die Sensorfläche in Richtung des optischen Detektors auslenkungssensitiv reflektiert/abgelenkt und der reflektierte Laserlichtstrahl vom optischen Detektor positionssensitiv detektiert wird.

Gemäss einer spezifischen Ausführungsform des Tastsystems kann das Sensorelement, insbesondere die Kopplungseinheit, die Lichtquelle aufweisen.

Gemäss einer weiteren spezifischen Ausführungsform des Tastsystems kann die Lichtquelle eine LED-Lichtquelle sein und die Sensorfläche die LED-Lichtquelle aufweisen.

Gemäss einer weiteren Ausführungsform des Tastsystems kann die optische Detektionsvorrichtung eine Maske aufweisen, welche von dem auslenkungssensitiv in Richtung des optischen Detektors gelenkten Lichtstrahl zumindest teilweise durchstrahlt wird, wobei basierend darauf ein Lichtstrahlmuster erzeugt wird. Des Weiteren kann der optische Detektor dazu konfiguriert sein das Lichtstrahlmuster zu detektieren, und der Prozessor kann dazu konfiguriert sein basierend auf dem detektierten Lichtstrahlmuster eine Berührung zwischen dem Taststift und einem Punkt der Oberfläche zu identifizieren und eine Auslenkung des Taststifts, insbesondere in mindestens drei und bis zu sechs Freiheitsgraden, in Form eines Auslenkungswerts zu bestimmen.

Gemäss einer weiteren Ausführungsform des Tastsystems kann der optische Detektor mindestens einen flächigen Kamerasensor aufweisen.

Gemäss einer weiteren Ausführungsform kann ein Überschreiten des definierten Auslenkungsschwellenwerts zu einer Unterbrechung eines elektrischen Kontakts, und/oder der Verbindung des Taststifts mit dem Sensorelement im Sinne einer Entkopplung führen, wobei die Unterbrechervorrichtung die maschinengeführte Abtastung basierend darauf unterbricht.

Gemäss einer weiteren spezifischen Ausführungsform des Tastsystems kann dieses ein Distanzmessmodul zur Bestimmung von Distanzen zwischen dem Tastsystemgehäuse und sich innerhalb eines Abtastvolumens befindlichen vermessbaren Punkten aufweisen, wobei der Prozessor dazu konfiguriert ist, basierend auf bestimmten Distanzen die maschinengeführte Abtastung zu steuern.

Gemäss einer weiteren spezifischen Ausführungsform des Tastsystems kann dieses eine inertiale Messeinheit (IMU) zur Erzeugung von Bewegungssignalen basierend auf der maschinengeführten Bewegung des Tastsystems aufweisen, wobei der Prozessor dazu konfiguriert ist auch basierend auf den erzeugten Bewegungssignalen den Auslenkungswert zu bestimmen.

### -KURZE BESCHREIBUNG DER FIGUREN-

Das erfindungsgemässe Sensorelement und Tastsystem wird nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:
- Figur 1: eine schematische Darstellung einer möglichen Ausführungsform des Sensorelements;
- Figur 2: eine schematische Darstellung einer möglichen Ausführungsform des Tastsystems; und
- Figur 3: eine schematische Darstellung des Zusammenwirkens von Lichtstrahlung, Sensorfläche und Detektionsvorrichtung gemäss möglichen Ausführungsformen des Tastsystems.

### -DETAILLIERTE BESCHREIBUNG DER ERFINDUNG-

Sensorelemente, welche in Tastsystemen zur taktilen Vermessung von Oberflächenpunkten verwendet werden, weisen üblicherweise ein federnd gelagertes Kopplungselement auf. Dabei ist das Kopplungselement dazu ausgestaltet einen Taststift mit dem Sensorelement so zu koppeln, dass der Taststift in einer Ruhelage gehalten wird falls keine Auslenkungskräfte auf den Taststift einwirken. Gleichzeitig ist das Kopplungselement dazu ausgelegt bei Einwirkung von Auslenkungskräften auf den Taststift eine Auslenkung des Taststifts aus der Ruhelage zu ermöglichen. Dabei steht die Auslenkung des Taststifts in definiertem Verhältnis zu den Auslenkungskräften und ist dahingehend reversibel, als dass der Taststift wieder die Ruhelage einnimmt falls keine Auslenkungskräfte mehr auf ihn einwirken. In diesem Sinne sind Taststifte üblicherweise federnd an das entsprechende Sensorelement gekoppelt. Bei einer solchen Art der Kopplung ist die Auslenkungscharakteristik des Taststiftes bestimmt durch die elastischen Verformungseigenschaften der Lagerung des Kopplungselementes. Die elastischen Verformungseigenschaften der Lagerung werden unter anderem durch geometrische Faktoren und materialspezifische Eigenschaften bestimmt. Bei solchen Sensorelementen ist für die Genauigkeit und die Sensitivität bezüglich der Bestimmung der Auslenkung des Taststiftes die Auslenkungsscharakteristik entscheidend, welche wiederum durch die elastischen Verformungseigenschaften der Lagerung bestimmt wird. Üblicherweise werden solche Kopplungselemente mittels metallischer Federlagerelemente gelagert. Metalle bieten eine hohe Flexibilität was die Formgebung entsprechender Federlagerelemente und auch die elastischen Materialeigenschaften betrifft. Ebenfalls weisen Metalle aufgrund ihrer Zähigkeit eine erhöhte Toleranz gegenüber Defekten im Material auf, sodass sie weniger anfällig auf irreversibles Materialversagen sind. Diese Eigenschaft ist vor allem nützlich bei Anwendungen in welchen das Material einer zyklischen Belastung ausgesetzt wird, wie dies beispielsweise bei Federn der Fall ist.

Im Gegensatz zu den Metallen gibt es weitere Materialklassen, beispielsweise Keramiken und Gläser, welche aufgrund ihres atomaren Aufbaus theoretische, den Metallen überlegene elastische Verformungseigenschaften aufweisen. Gerade bei Keramiken und Gläsern können diese jedoch oft nicht genutzt werden, weil sie sehr geringe Zähigkeitswerte haben und empfindlich auf Überbelastung und Defekte im Material reagieren - dies oft mit sofortigem irreversiblen Materialversagen. Ebendiese Schwäche limitiert den Einsatzbereich solcher Materialen in Anwendungen in welchen sie zyklischen Belastungen ausgesetzt sind stark.

Die vorliegende Erfindung beschreibt ein Sensorelement 1 der oben beschriebenen Art, welches aus Silikatglas insbesondere Quarzglas besteht. Dabei ist das Sensorelement 1 einstückig ausgebildet, d.h. es wird aus einem Silikatglasrohling bzw. einem Silikatglas-Monolithen hergestellt und weist somit keine Füge- bzw. Verbindungsstellen auf. Ein mögliches Verfahren zur Herstellung eines solchen Sensorelements - ähnlich demjenigen eines 3D Druckprozesses - basiert auf der lokalen Modifikation von Bereichen eines Glasrohlings/Glasmonolithen mittels fokussierter Laserstrahlung und anschliessendem chemischen Wegätzen zuvor der fokussierten Laserstrahlung ausgesetzter Glasbereiche. Durch dieses laserbasierte Ätzverfahren erzeugte Oberflächen weisen eine sehr geringe Defektdichte auf und eignen sich auch zur Beschichtung insbesondere mit metallischen Schichten oder Schichtfolgen. Des Weiteren, ist der 3D-druckartige Prozess ausreichend flexibel gewünschte Geometrien auch makroskopisch zu erzeugen, um beispielsweise, wie in der vorliegenden Erfindung, grosse Oberflächen/Wirkflächen/Spiegelflächen/Verbindungsflächen der Kopplungseinheit bereitzustellen. Ein weiterer Vorteil des Verfahrens ist die Möglichkeit zur Formgebung flexibler, sich elastisch verformender Verbindungen beispielsweise Federlagerelemente, insbesondere entsprechender Federlagerelementquerschnitte.

Ein nach diesem Verfahren gefertigtes Sensorelement 1 weist - das Federlager betreffend - aufgrund der geringen Defektdichte im Material ein - metallbasierten Sensorelementen gegenüber - überlegenes elastisches Verformungsverhalten auf und hat aufgrund der Einstückigkeit und dem geringen Ausdehnungskoeffizienten von Silikatglas, insbesondere Quarzglas, eine hohe thermische Stabilität.

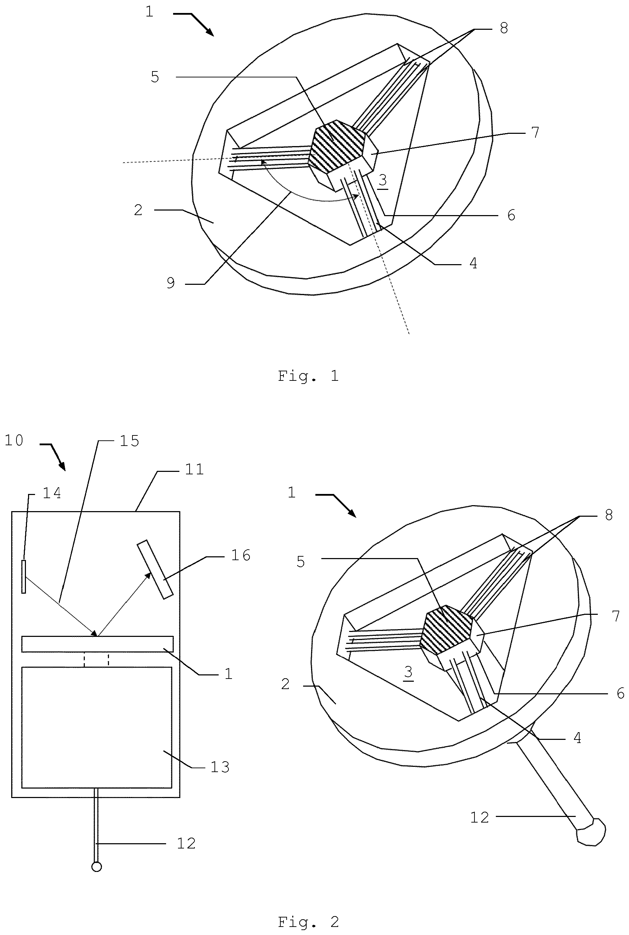

Das monolithisch hergestellte Sensorelement 1 gemäss einer Ausführungsform wie in Figur 1 gezeigt weist einen Basiskörper 2 und eine Kopplungseinheit 7 auf. Der Basiskörper 2 hat eine mittige Aussparung 3 und übernimmt die Funktion eines Statorelements oder einer Halterung. Die mittige Aussparung 3 kann typischerweise lochförmig ausgebildet sein. Die Kopplungseinheit 7 wird über sechs Federlagerelemente 4 in der mittigen Aussparung 3 des Basiskörpers 2 federnd gelagert. Dabei können die einzelnen Federlagerelemente 4 stabförmig und mit rundem, ovalem oder auch eckigem Querschnitt ausgebildet sein. Wie beispielhaft in Figur 1 gezeigt sind die sechs Federlagerelemente 4 gleich lang und paarweise 8 um die Kopplungseinheit 7 angeordnet, wobei zwei Federlagerelementpaare 8 jeweils einen Winkel 9 von um die 120°, insbesondere von 110 bis 130°, einschliessen/bilden. Ein Federlagerelementpaar 8 weist dabei zwei stabförmige Federlagerelemente 4 auf, welche parallel zueinander angeordnet sind. Die federnd gelagerte und somit in mindestens zwei rotatorischen und einem translatorischen Freiheitsgrad bewegbare Kopplungseinheit 7 weist auf einer Seite die Sensorfläche 5 und auf einer der Sensorfläche gegenüberliegenden Seite die Verbindungsfläche 6 auf und koppelt diese mechanisch aneinander. Die Verbindungsfläche 6 ist dazu ausgestaltet einen Taststift 12 direkt oder über ein Adapterstück beispielsweise eine Unterbrechervorrichtung 13 mit dem Sensorelement 1 zu verbinden. D.h. es wird über die Verbindungsfläche 6 eine mechanisch gekoppelte Verbindung zwischen dem Taststift 12 und dem Sensorelement 1 hergestellt.

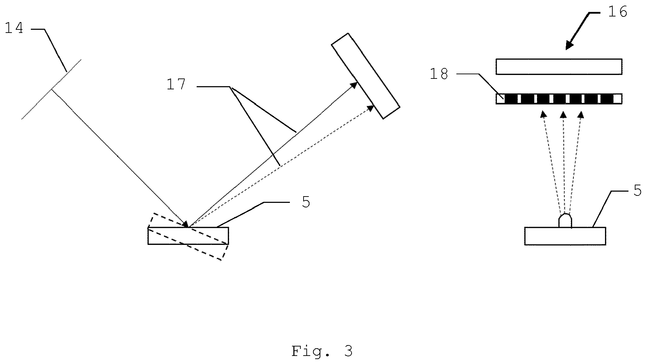

Wie schematisch angedeutet kann die Sensorfläche 5 eine Fläche sein, welche optische Strahlung, beispielsweise Laserstrahlung oder auch Lichtstrahlung gerichtet reflektiert oder ablenkt. Dabei wird die optische Strahlung in Abhängigkeit der Winkelstellung und Position der Sensorfläche zur einfallenden Strahlung, beispielsweise in Richtung eines Detektors, reflektiert wie schematisch in Figur 3 gezeigt. Die Winkelstellung der Sensorfläche zur einfallenden Strahlung kann beispielsweise durch die Auslenkung des an das Sensorelement gekoppelten bzw. mit dem Sensorelement verbundenen Taststifts 12 bestimmt sein. Somit kann das Sensorelement 1 ein Signal erzeugen, welches mit der Auslenkung des Taststiftes korreliert wobei das Signal dazu verwendet werden kann die Auslenkung des Taststifts zu bestimmen.

Die Verwendung eines vorgehend beschriebenen Sensorelements 1 in einem Tastsystem 10 zur maschinengeführten Abtastung und Vermessung von Oberflächenpunkten ist rein schematisch und beispielhaft in Figur 2 gezeigt. Ein solches Tastsystem weist typischerweise ein Tastsystemgehäuse 11, ein Sensorelement 1, einen Taststift 12, eine Unterbrechervorrichtung 13, eine Lichtquelle 14, eine optische Detektionsvorrichtung 16 und einen Prozessor/Computer mit der nötigen Elektronik und Kühlung auf. Standardmässig weisen solche Tastsysteme eine genormte Befestigungsvorrichtung auf (nicht gezeigt) zu deren Befestigung beispielsweise an einer beweglichen Plattform einer Koordinatenmessmaschine oder an einer Werkzeugaufnahme einer automatisch gesteuerten Werkstückbearbeitungsmaschine. Im Folgenden werden wichtige Punkte betreffend die Funktionsweise eines solchen Tastsystems 10 beschrieben.

Wie schematisch in Figur 2 gezeigt befindet sich an dem einen Ende des mit dem Sensorelement 1 verbundenen Taststifts 12 eine Rubinkugel. Sobald diese Rubinkugel einen Oberflächenpunkt berührt erfährt der Taststift 12 eine Auslenkungskraft. Diese Auslenkungskraft bewirkt in Abhängigkeit des elastischen Verformungsverhaltens der Federlagerelemente eine zur Auslenkungskraft korrelierende Auslenkung des Taststifts 12. Die Auslenkung des Taststifts 12 bewirkt aufgrund seiner mechanischen Kopplung an das Sensorelement eine Auslenkung der Sensorfläche 5 aus der Ruhelage. Die Auslenkung der Sensorfläche 5 aus der Ruhelage bewirkt eine zur Auslenkung des Taststiftes 12 verhältnismässig bestimmte Ablenkung des von der Lichtquelle 14 ausgesendeten Lichtstrahls. Diese Ablenkung des Lichtstrahls wird von der optischen Detektionsvorrichtung 16 detektiert, wobei der Prozessor/Computer die detektierte Ablenkung des Lichtstrahls analysiert und basierend darauf die Berührung der Rubinkugel mit der Oberfläche erkennt und basierend darauf auch die Auslenkung des Taststiftes 12 bestimmt. Dabei wird die Auslenkung des Taststiftes 12 beispielsweise in x-, y- und z-Richtung ermittelt und diese Information als Auslenkungswert der Koordinatenmessmaschine oder Werkstückbearbeitungsmaschine bereitgestellt. Mit dieser Information und mit Kenntnis der genauen Position des Tastsystems im Koordinatensystem der Koordinatenmessmaschine oder Werkstückbearbeitungsmaschine kann dann die Koordinatenmessmaschine oder Werkstückbearbeitungsmaschine die genauen Koordinaten des berührten Oberflächenpunktes ermitteln.

Je nach Ausführungsform kann die Lichtquelle 14 des Tastsystems 10 eine definierte Lage- und Positionsrelation zu dem Sensorelement 1 aufweisen und beispielsweise im Randbereich des Gehäuses 11 angeordnet sein. Dabei kann die Lichtquelle 14 eine Laserlichtquelle zur Aussendung eines Laserstrahls oder auch eine LED-Lichtquelle sein. Der Laserstrahl oder das von der LED-Lichtquelle ausgesendete Licht ist dann auf die Sensorfläche 5 gerichtet und wird von dieser zur Detektionsvorrichtung hin abgelenkt/reflektiert.

Entsprechend der jeweiligen Ausführungsform kann sich die Lichtquelle 14, beispielsweise LED-Lichtquelle, auch auf der Sensorfläche 5 befinden. Dann bewirkt eine Auslenkung des Taststiftes 12 eine Änderung der Position und/oder Lage der Lichtquelle und somit eine Ablenkung der ausgesendeten Lichtstrahlung.

Die optische Detektionsvorrichtung 16 des Tastsystems 10 ist eine notwendige Komponente, um das vom Sensorelement 1 erzeugte Sensorsignal einem Berührungsvorgang oder einem Auslenkungswert des Taststifts 12 zuzuordnen. Ein solche Detektionsvorrichtung 16 kann beispielsweise einen oder mehrere pixelbasierte Kamerasensoren aufweisen, welche einfallendes Licht positionssensitiv detektieren. Diese Information wird dann dem Prozessor mit Bilddatenauswertefunktionalität bereitgestellt, wobei der Prozessor basierend auf dieser Information eine Auslenkung des Taststiftes 12 bestimmt. Eine solche Detektionsvorrichtung 16 kann zusätzlich zu den pixelbasierten Kamerasensoren auch noch eine den Kamerasensoren vorgesetzte Maske 18 aufweisen. Diese Maske hat ein bestimmtes Muster mit Bereichen, welche für die zur Detektionsvorrichtung 16 abgelenkte/reflektierte Lichtstrahlung durchlässig sind und Bereiche, welche für ebendiese Lichtstrahlung undurchlässig sind. Dieses Muster wird bei Durchstrahlung der Maske durch die Lichtstrahlung auf den Kamerasensoren abgebildet. Basierend auf der vom Detektor erzeugten Abbildungsinformation kann der Prozessor durch Analyse der Abbildungsinformation die Auslenkung des Taststiftes 12 in bis zu sechs Freiheitsgraden bestimmen.

Die Unterbrechervorrichtung 13 ist eine Vorrichtung über welche der Taststift 12 mit dem Sensorelement 1 verbunden/mechanisch gekoppelt wird. Diese Unterbrechervorrichtung ist dazu ausgelegt Auslenkungen des Taststifts 12 zu begrenzen, sodass die Federlagerelemente 4 des Sensorelements 1 nicht überbelastet werden und versagen. Die Begrenzung der Auslenkung kann beispielsweise basierend auf der Unterbrechung oder auch Herstellung eines elektrischen Kontaktes erfolgen. Dabei wird bei einer Auslenkung des Taststifts 12, welche einen Auslenkungsschwellenwert überschreitet ein bestehender elektrischer Kontakt unterbrochen oder ein elektrischer Kontakt hergestellt. Basierend darauf wird die maschinengeführte Bewegung des Tastsystems 10 gestoppt und somit eine Überbelastung des Sensorelements 1 verhindert. Alternativ kann die Unterbrechervorrichtung 13 auch eine Verbindung zwischen dem Taststift 12 und dem Sensorelement bereitstellen, welche bei einer bestimmten Belastung, die einen Belastungsschwellenwert überschreitet, unterbrochen wird, sodass der Taststift 12 von dem Sensorelement 1 mechanisch entkoppelt wird und somit keine Kräfte mehr vom Taststift 12 an das Sensorelement übertragen werden.

Das Tastsystem 10 kann auch ein Distanzmessmodul aufweisen. Dabei werden vom Distanzmessmodul mittels berührungsloser Distanzmesssensoren, beispielweise laserbasiert, Distanzen zu Oberflächen von Objekten, welche sich innerhalb des Bewegungsraumes des Tastsystems 10 befinden bestimmt. Basierend auf diesen ermittelten Distanzen wird dann von der Koordinatenmessmaschine bzw. der Werkstückbearbeitungsmaschine die Bewegung des Tastsystems gesteuert. Ein solches Distanzmessmodul kann das Risiko einer Kollision bzw. eines Aufpralls des Taststiftes 12, welcher zum Ausfall des Sensorelements 1 führt verringern.

Das Tastsystem 10 kann auch eine inertiale Messeinheit (IMU) aufweisen. Dabei generiert die IMU mittels Beschleunigungssensoren und Drehratensensoren Bewegungssignale welche die Bewegung des Tastsystems 10 digital beschreiben. Es kann vorkommen, dass die Bewegung des Tastsystems 10 beispielsweise aufgrund von starker Beschleunigung des Tastsystems 10 oder Vibrationen eine Auslenkung des Taststiftes 12 bewirkt. Es kann vorteilhaft sein auf diese Weise bewirkte Auslenkungen des Taststiftes 12 zu identifizieren, sodass sie nicht mit in die Bestimmung der Auslenkung des Taststiftes 12 - bewirkt durch eine Berührung mit einem Oberflächenpunkt - einfliessen. Dazu kann der Prozessor dazu konfiguriert sein, Bewegungsmuster in Bewegungssignalen zu erkennen und diese mit korrespondierenden Auslenkungsmustern zu korrelieren und basierend darauf die Bestimmung der Auslenkung des Taststiftes 12 vorzunehmen.

Das beschriebene Sensorelement 1 kann auch so ausgestaltet sein, dass es drei Federlagerelemente aufweist, wobei jedes Federlagerelement einer Hauptbewegungsrichtung, beispielsweise der X-, Y-, oder Z-Richtung, zugeordnet ist. Dabei sind die Hauptbewegungsrichtungen idealerweise orthogonal zueinander. Einer Hauptbewegungsrichtung zugeordnet bedeutet, dass das jeweilige Federlagerelement ausschliesslich in die dem Federlagerelement zugeordnete Hauptbewegungsrichtung ausgelenkt werden kann. Eine beliebige Auslenkung des Taststiftes wird dann durch die drei Federlagerelemente aufgeteilt in drei Auslenkungsanteile. Jeder Auslenkungsanteil beschreibt die Auslenkung des Taststifts in die jeweilige Hauptbewegungsrichtung. Das Sensorelement weist dann drei Sensorflächen auf wobei jede Sensorfläche einer Hauptbewegungsrichtung und jeder Sensorfläche eine eigene Detektionsvorrichtung zugeordnet ist. Der Computer kann dann dazu konfiguriert sein die Auslenkung des Taststiftes basierend auf den detektierten Auslenkungsanteilen zu bestimmen.

Es versteht sich, dass diese dargestellten Figuren nur mögliche Ausführungsbeispiele schematisch darstellen.

## Patentansprüche

1. Sensorelement (1) zur Signalisierung und Bestimmung einer Auslenkung eines Taststifts, insbesondere eines maschinengeführten Tastsystems, mit
o einem Basiskörper (2) mit einer mittigen Aussparung (3),
o einem Federlager mit mindestens einem Federlagerelement (4),
o einer Sensorfläche (5),
o einer der Sensorfläche (5) gegenüberliegenden Verbindungsfläche (6), welche dazu konfiguriert ist einen Taststift mit dem Sensorelement (1) zu verbinden, und
o einer Kopplungseinheit (7), wobei die Kopplungseinheit (7)
i. durch das Federlager federnd in der mittigen Aussparung (3) des Basiskörpers (2) gelagert ist, wobei das Federlager eine Bewegbarkeit der Kopplungseinheit (7) in mindestens zwei rotatorischen und einem translatorischen Freiheitsgrad bereitstellt, und
ii. die Sensorfläche (5) und die Verbindungsfläche (6) mechanisch aneinanderkoppelt,
wobei
o die Auslenkung eines mit dem Sensorelement verbundenen Taststifts über die Verbindungsfläche (6) und Kopplungseinheit (7) eine Auslenkung der Sensorfläche (5) bewirkt und die Auslenkung der Sensorfläche (5) in einer festen und definierten Relation zur Auslenkung des Taststifts steht, und
**dadurch gekennzeichnet, dass**
o das Federlager, die Sensorfläche (5), die Verbindungsfläche (6), die Kopplungseinheit (7) und der Basiskörper (2) einstückig miteinander in einem einstückigen Verbund aus Silikatglas, insbesondere Quarzglas, verbunden sind, wobei der einstückige Verbund monolithisch aus Silikatglas, insbesondere Quarzglas, gefertigt ist.

2. Sensorelement nach Anspruch 1, wobei das Federlager sechs Federlagerelemente (4), insbesondere gleicher Länge, aufweist, die als drei Federlagerelementpaare (8) in der mittigen Aussparung (3) des Basiskörpers (2) unter einem Winkel von 120° (9) zueinander angeordnet sind.

3. Sensorelement nach einem der vorhergehenden Ansprüche, wobei der Basiskörper (2) scheibenförmig, insbesondere als rundliche Scheibe, ausgebildet ist, insbesondere mit einem Durchmesser von mindestens 1 cm, und das Federlagerelement (4) als stabförmiges Blattfederelement oder als Stabfederelement mit rundlichem Querschnitt ausgebildet ist.

4. Sensorelement nach einem der vorhergehenden Ansprüche, wobei die Sensorfläche (5) eine optische Strahlung, insbesondere spiegelnd/gerichtet, reflektierende Fläche ist oder aufweist.

5. Sensorelement nach einem der vorhergehenden Ansprüche, wobei die Verbindungsfläche (6) dazu konfiguriert ist einen Taststift über eine Unterbrechervorrichtung mit dem Sensorelement zu verbinden.

6. Sensorelement nach einem der vorhergehenden Ansprüche, wobei das Federlager eine Bewegbarkeit der Kopplungseinheit (7) in
o einem translatorischen Freiheitsgrad in Richtung der Längsrichtung eines mit dem Sensorelement verbundenen Taststifts, und
o zwei rotatorischen Freiheitsgraden um zwei Rotationsachsen senkrecht, insbesondere zueinander und, zur Längsrichtung eines mit dem Sensorelement verbundenen Taststiftes
bereitstellt.

7. Tastsystem (10) zur maschinengeführten Abtastung von Punkten einer Oberfläche mit
o einem Tastsystemgehäuse (11),
o einem Sensorelement (1) zur Erzeugung eines Auslenkungssignals,
o einem Taststift (12), der mit dem Sensorelement (1) verbunden ist,
o einer Unterbrechervorrichtung (13) zur Unterbrechung der maschinengeführten Abtastung,
o einer Lichtquelle (14) zur Aussendung eines Lichtstrahls (15),
o einer optischen Detektionsvorrichtung (16) mit definierter Lage- und Positionsrelation zu dem Sensorelement (1) und mit einem optischen Detektor zur Detektion von Lichtstrahlung,
wobei
i. das Sensorelement (1) mit dem Tastsystemgehäuse (11) verbunden ist und eine Sensorfläche (5) aufweist, die ein Auslenkungssignal erzeugt, das eine Auslenkung des Taststifts (12) anzeigt, wobei der Taststift (12) über die Unterbrechervorrichtung (13) mit dem Sensorelement (1) und relativ zum Tastsystemgehäuse (11) auslenkbar verbunden ist,
ii. die Unterbrechervorrichtung (13) die maschinengeführte Abtastung bei Überschreitung eines definierten Auslenkungsschwellenwerts durch den Taststift (12) unterbricht, und
iii. das Auslenkungssignal basierend darauf erzeugt wird, dass ein von der Lichtquelle (14) ausgesendeter Lichtstrahl durch ein Zusammenwirken mit der Sensorfläche (5) auslenkungssensitiv (17) in Richtung des optischen Detektors gelenkt und von diesem positionssensitiv detektiert wird, und
o einem Prozessor, welcher dazu konfiguriert ist basierend auf dem Auslenkungssignal eine Berührung zwischen dem Taststift (12) und einem Punkt der Oberfläche zu identifizieren und eine Auslenkung des Taststifts (12), insbesondere in mindestens zwei Freiheitsgraden, in Form eines Auslenkungswerts zu bestimmen,
wobei
das Sensorelement (1) ein Sensorelement nach einem der Ansprüche 1 bis 6 ist.

8. Tastsystem nach Anspruch 7, wobei die Lichtquelle (14) eine Laserlichtquelle zur Aussendung eines Laserlichtstrahls ist und eine definierte Lage- und Positionsrelation zu dem Sensorelement (1) aufweist, wobei der Laserlichtstrahl auf das Sensorelement (1) gerichtet in Richtung der Sensorfläche (5) ausgesendet wird, und der Laserlichtstrahl durch die Sensorfläche (5) in Richtung des optischen Detektors auslenkungssensitiv reflektiert und der reflektierte Laserlichtstrahl vom optischen Detektor positionssensitiv detektiert wird.

9. Tastsystem nach einem der vorhergehenden Ansprüche, wobei das Sensorelement (1), insbesondere die Kopplungseinheit (7), die Lichtquelle aufweist.

10. Tastsystem nach Anspruch 9, wobei die Lichtquelle eine LED-Lichtquelle ist und die Sensorfläche (5) die LED-Lichtquelle aufweist.

11. Tastsystem nach einem der vorhergehenden Ansprüche, wobei
o die optische Detektionsvorrichtung (16) eine Maske (18) aufweist, welche von dem auslenkungssensitiv in Richtung des optischen Detektors gelenkten Lichtstrahl zumindest teilweise durchstrahlt wird, und basierend darauf ein Lichtstrahlmuster erzeugt wird,
o der optische Detektor dazu konfiguriert ist das Lichtstrahlmuster zu detektieren, und
o der Prozessor dazu konfiguriert ist basierend auf dem detektierten Lichtstrahlmuster eine Berührung zwischen dem Taststift (12) und einem Punkt der Oberfläche zu identifizieren und eine Auslenkung des Taststifts (12), insbesondere in mindestens drei und bis zu sechs Freiheitsgraden, in Form eines Auslenkungswerts zu bestimmen.

12. Tastsystem nach einem der vorhergehenden Ansprüche, wobei der optische Detektor mindestens einen flächigen Kamerasensor aufweist.

13. Tastsystem nach einem der vorhergehenden Ansprüche, wobei
ein Überschreiten des definierten Auslenkungsschwellenwerts zu einer Unterbrechung
o eines elektrischen Kontakts, und/oder
o der Verbindung des Taststifts mit dem Sensorelement im Sinne einer Entkopplung führt,
und die Unterbrechervorrichtung (13) die maschinengeführte Abtastung basierend darauf unterbricht.

14. Tastsystem nach einem der vorhergehenden Ansprüche, mit einem Distanzmessmodul zur Bestimmung von Distanzen zwischen dem Tastsystemgehäuse (11) und sich innerhalb eines Abtastvolumens befindlichen vermessbaren Punkten, wobei der Prozessor dazu konfiguriert ist, basierend auf bestimmten Distanzen die maschinengeführte Abtastung zu steuern.

15. Tastsystem nach einem der vorhergehenden Ansprüche, mit einer inertialen Messeinheit (IMU) zur Erzeugung von Bewegungssignalen basierend auf der maschinengeführten Bewegung des Tastsystems, wobei der Prozessor dazu konfiguriert ist auch basierend auf den erzeugten Bewegungssignalen den Auslenkungswert zu bestimmen.

## Claims

1. Sensor element (1) for signaling and determining a deflection of a probe pin, in particular of a machine-guided probe system, comprising
∘ a base body (2) having a central recess (3),
∘ a spring bearing having at least one spring bearing element (4),
∘ a sensor surface (5),
∘ a connecting surface (6) opposite the sensor surface (5), which is configured to connect a probe pin to the sensor element (1), and
∘ a coupling unit (7), wherein the coupling unit (7)
i. is spring-mounted in the central recess (3) of the base body (2) by the spring bearing, wherein the spring bearing provides movability of the coupling unit (7) in at least two rotational and one translational degrees of freedom, and
ii. mechanically couples the sensor surface (5) and the connecting surface (6) to each other,
wherein
∘ the deflection of a probe pin connected to the sensor element via the connecting surface (6) and coupling unit (7) causes a deflection of the sensor surface (5), and the deflection of the sensor surface (5) is in a fixed and defined relation to the deflection of the probe pin, and
**characterized in that**
∘ the spring bearing, the sensor surface (5), the connecting surface (6), the coupling unit (7) and the base body (2) are integrally connected to one another in an integral composite of silicate glass, in particular quartz glass, wherein the integral composite is manufactured monolithically from silicate glass, in particular quartz glass.

2. Sensor element according to claim 1, wherein the spring bearing has six spring bearing elements (4), in particular of the same length, which are arranged as three spring bearing element pairs (8) in the central recess (3) of the base body (2) at an angle of 120° (9) relative to one another.

3. Sensor element according to one of the preceding claims, wherein the base body (2) is disk-shaped, in particular as a round disk, in particular with a diameter of at least 1 cm, and the spring bearing element (4) is designed as a rod-shaped leaf spring element or as a rod spring element with a round crosssection.

4. Sensor element according to one of the preceding claims, wherein the sensor surface (5) is or comprises a surface reflecting an optical radiation, in particular specular/directional.

5. Sensor element according to one of the preceding claims, wherein the connecting surface (6) is configured to connect a probe pin to the sensor element via an interrupter device.

6. Sensor element according to one of the preceding claims, wherein the spring bearing provides the coupling unit (7) with a movability in
∘ a translational degree of freedom in the direction of the longitudinal direction of a probe pin connected to the sensor element, and
∘ two rotational degrees of freedom about two rotational axes perpendicularly, in particular to each other and, to the longitudinal direction of a probe pin connected to the sensor element.

7. Probe system (10) for machine-guided scanning of points on a surface, comprising
∘ a probe system housing (11),
∘ a sensor element (1) for generating a deflection signal,
∘ a probe pin (12) connected to the sensor element (1),
∘ an interrupter device (13) for interrupting the machine-guided scanning,
∘ a light source (14) for emitting a light beam (15),
∘ an optical detection device (16) having defined attitude and position relation to the sensor element (1) and having an optical detector for the detection of light radiation,
wherein
i. the sensor element (1) is connected to the probe system housing (11) and has a sensor surface (5) which generates a deflection signal indicating a deflection of the probe pin (12), wherein the probe pin (12) is deflectably connected to the sensor element (1) and relative to the probe system housing (11) via the interrupter device (13),
ii. the interrupter device (13) interrupts the machine-guided scanning when the probe pin (12) exceeds a defined deflection threshold value, and
iii. the deflection signal is generated based on the fact that a light beam emitted from the light source (14) is deflectionsensitively (17) directed in the direction of the optical detector by interacting with the sensor surface (5) and is positionsensitively detected thereby, and
∘ a processor configured to identify a contact between the probe pin (12) and a point of the surface based on the deflection signal and to determine a deflection of the probe pin (12), in particular in at least two degrees of freedom, in the form of a deflection value,
wherein
the sensor element (1) is a sensor element according to one of claims 1 to 6.

8. Probe system according to claim 7, wherein the light source (14) is a laser light source for emitting a laser light beam and has a defined attitude and position relation to the sensor element (1), wherein the laser light beam is emitted directed to the sensor element (1) in the direction of the sensor surface (5), and the laser light beam is reflected by the sensor surface (5) in the direction of the optical detector in a deflection-sensitive manner and the reflected laser light beam is detected by the optical detector in a positionsensitive manner.

9. Probe system according to one of the preceding claims, wherein the sensor element (1), in particular the coupling unit (7), comprises the light source.

10. Probe system according to claim 9, wherein the light source is an LED light source and the sensor surface (5) comprises the LED light source.

11. Probe system according to one of the preceding claims, wherein
∘ the optical detection device (16) comprises a mask (18) through which the light beam directed toward the optical detector in deflection-sensitive manner is at least partially transmitted, and based thereon a light beam pattern is generated,
∘ the optical detector is configured to detect the light beam pattern, and
∘ the processor is configured to identify a contact between the probe pin (12) and a point of the surface based on the detected light beam pattern and to determine a deflection of the probe pin (12), in particular in at least three and up to six degrees of freedom, in the form of a deflection value.

12. Probe system according to one of the preceding claims, wherein the optical detector comprises at least one planar camera sensor.

13. Probe system according to one of the preceding claims, wherein exceeding the defined deflection threshold value results in an interrupt
∘ of an electrical contact, and/or
∘ of the connection between the probe pin and the sensor element in the sense of decoupling,
and the interrupter device (13) interrupts the machine-guided scanning based thereon.

14. Probe system according to one of the preceding claims, comprising a distance measurement module for determining distances between the probe system housing (11) and measurable points located within a scanning volume, wherein the processor is configured to control machine-guided scanning based on determined distances.

15. Probe system according to one of the preceding claims, comprising an inertial measurement unit (IMU) for generating motion signals based on the machine-guided motion of the probe system, wherein the processor is configured to determine the deflection value also based on the generated motion signals.

## Revendications

1. Élément de capteur (1) pour la signalisation et la détermination d'une déviation d'un palpeur, en particulier d'un système de palpage guidé par machine, avec
∘ un corps de base (2) avec un évidement central (3),
∘ un palier élastique avec au moins un élément de palier élastique (4),
∘ une surface de capteur (5),
∘ une surface de liaison (6) opposée à la surface de capteur (5) qui est configurée pour relier un palpeur à l'élément de capteur (1) et
∘ une unité de couplage (7), cependant que l'unité de couplage (7),
i. est positionnée élastique dans l'évidement central (3) du corps de base (2) par le palier élastique, cependant que le palier élastique procure une mobilité à l'unité de couplage (7) dans au moins deux degrés de liberté en rotation et un en translation et
ii. accouple mécaniquement la surface de capteur (5) et la surface de liaison (6)
cependant que
∘ la déviation d'un palpeur relié à l'élément de capteur provoque, par la surface de liaison (6) et l'unité de couplage (7), une déviation de la surface de capteur (5) et la déviation de la surface de capteur (5) est dans une relation fixe et définie avec la déviation du palpeur et
**caractérisé en ce que**
∘ le palier élastique, la surface de capteur (5), la surface de liaison (6), l'unité de couplage (7) et le corps de base (2) sont reliés en une pièce l'un à l'autre dans un composite monopièce fait de verre au silicate, en particulier en verre de quartz, le composite monopièce étant un composite monolithique en verre au silicate, en particulier en verre de quartz.

2. Élément de capteur selon la revendication 1, cependant que le palier élastique présente six éléments de palier élastique (4), en particulier de même longueur, qui sont placés l'un par rapport à l'autre dans un angle de 120° (9) en tant que trois paires d'éléments de palier élastique (8) dans l'évidement central (3) du corps de base (2).

3. Élément de capteur selon l'une des revendications précédentes, cependant que le corps de base (2) est configuré en forme de disque, en particulier en disque arrondi, en particulier avec un diamètre d'au moins 1 cm et l'élément de palier élastique (4) est configuré comme un élément de ressort à lame en forme de barre ou comme un élément de ressort en barre avec une section arrondie.

4. Élément de capteur selon l'une des revendications précédentes, cependant que la surface de capteur (5) est ou présente une surface réfléchissant, en particulier spéculaire/orientée, un rayonnement optique.

5. Élément de capteur selon l'une des revendications précédentes, cependant que la surface de liaison (6) est configurée pour relier un palpeur à l'élément de capteur par un dispositif d'interruption.

6. Élément de capteur selon l'une des revendications précédentes, cependant que le palier élastique procure une mobilité à l'unité de couplage (7) dans
∘ un degré de liberté en translation en direction du sens longitudinal d'un palpeur relié à l'élément de capteur et
∘ deux degrés de liberté en rotation autour de deux axes de rotation perpendiculaires au sens longitudinal d'un palpeur relié à l'élément de capteur, en particulier les deux axes de rotation étant perpendiculaires l'un par rapport à l'autre.

7. Système de palpage (10) pour le palpage guidé par machine de points d'une surface avec
∘ un bâti de système de palpage (11),
∘ un élément de capteur (1) pour générer un signal de déviation,
∘ un palpeur (12) qui est relié à l'élément de capteur (1),
∘ un dispositif d'interruption (13) pour interrompre le palpage guidé par machine,
∘ une source de lumière (14) pour émettre un faisceau lumineux (15),
∘ un dispositif de détection optique (16) avec une relation définie d'emplacement et de position par rapport à l'élément de capteur (1) et avec un détecteur optique pour la détection de rayonnement lumineux, cependant que
i. l'élément de capteur (1) est relié au bâti de système de palpage (11) et présente une surface de capteur (5) qui génère un signal de déviation qui indique une déviation du palpeur (12), cependant que le palpeur (12) est relié par le dispositif d'interruption (13) à l'élément de capteur (1) et pouvant être dévié par rapport au bâti de système de palpage (11),
ii. le dispositif d'interruption (13) interrompt le palpage guidé par machine lors du dépassement par le palpeur (12) d'un seuil de déviation défini et
iii. le signal de déviation est généré en étant basé sur le fait qu'un faisceau lumineux émis par la source de lumière (14) est dévié par une interaction avec la surface de capteur (5) en direction du détecteur optique et est détecté par celuici de manière sensible à la position et
∘ un processeur qui est configuré pour identifier, sur la base du signal de déviation, un contact entre le palpeur (2) et un point de la surface et pour déterminer une déviation du palpeur (12), en particulier dans au moins deux degrés de liberté, sous forme d'une valeur de déviation,
cependant que l'élément de capteur (1) est un élément de capteur selon l'une des revendications 1 à 6.

8. Système de palpage selon la revendication 7, cependant que la source de lumière (14) est une source de lumière laser pour émettre un faisceau de lumière laser et présente une relation définie d'emplacement et de position par rapport à l'élément de capteur (1), cependant que le faisceau de lumière laser est émis sur l'élément de capteur (1) en étant dirigé en direction de la surface de capteur (5) et que le faisceau de lumière laser est réfléchi par la surface de capteur (5) en direction du détecteur optique de manière sensible à la déviation et le faisceau de lumière laser réfléchi est détecté par le détecteur optique de manière sensible à la position.

9. Système de palpage selon l'une des revendications précédentes, cependant que l'élément de capteur (1), en particulier l'unité de couplage (7), présente la source de lumière.

10. Système de palpage selon la revendication 9, cependant que la source de lumière est une source de lumière LED et la surface de capteur (5) présente la source de lumière LED.

11. Système de palpage selon l'une des revendications précédentes, cependant que
∘ le dispositif de détection optique (16) présente un masque qui est traversé au moins partiellement par le faisceau lumineux dirigé de manière sensible à la déviation en direction du détecteur optique et qu'un motif de faisceau lumineux est généré sur cette base,
∘ le détecteur optique est configuré pour détecter le motif de faisceau lumineux et
∘ le processeur est configuré pour identifier, sur la base du motif de faisceau lumineux détecté, un contact entre le palpeur (12) et un point de la surface et déterminer une déviation du palpeur (12), en particulier dans au moins trois et jusqu'à six degrés de liberté, sous forme d'une valeur de déviation.

12. Système de palpage selon l'une des revendications précédentes, cependant que le détecteur optique présente au moins un capteur de caméra plat.

13. Système de palpage selon l'une des revendications précédentes, cependant qu'un dépassement du seuil de déviation défini entraîne une interruption
∘ d'un contact électrique et/ou
∘ de la liaison du palpeur avec l'élément de capteur dans le sens d'un découplage
et que le dispositif d'interruption (13) interrompt le palpage guidé par machine sur la base de celle-ci.

14. Système de palpage selon l'une des revendications précédentes avec un module de mesure de distance pour déterminer des distances entre le bâti de système de palpage (11) et des points qui peuvent être mesurés qui se trouvent à l'intérieur d'un volume de palpage, cependant que le processeur est configuré pour commander le palpage guidé par machine sur la base de distances déterminées.

15. Système de palpage selon l'une des revendications précédentes avec une unité de mesure inertielle (IMU) pour générer des signaux de mouvement sur la base du mouvement guidé par machine du système de palpage, cependant que le processeur est configuré pour déterminer la valeur de déviation sur la base des signaux de mouvement générés.
